# EUROPEAN PATENT APPLICATION

(11) **EP 4 749 702 A1**
(43) Date of publication of application: **27.05.2026**
(21) Application number: 24843175.1
(22) Date of filing: 18.07.2024
(51) Int. Cl.: H01M 4/13, H01M 4/66, H01M 10/052, H01M 10/0562, H01M 10/0565

(54) **SECONDARY BATTERY**

(30) Priority: 20.07.2023 JP 2023117960
(71) Applicant: Sanoh Industrial Co., Ltd., Shibuya-ku Tokyo 150-0002 (JP)
(72) Inventor: SAKAGUCHI, Yoshiki, Koga-shi, Ibaraki 306-0041 (JP); MAEDA, Yu, Koga-shi, Ibaraki 306-0041 (JP)
(74) Representative: Bryn Aarflot AS
(86) International application number: PCT/JP2024/025770
(87) International publication number: WO 2025/018387

(57) **Abstract**

A secondary battery having a solid electrolyte between a negative electrode and a positive electrode has a problem of cycle degradation in which capacity decreases due to charge/discharge cycles. Therefore, an object is to realize a secondary battery capable of suppressing the degradation of cycle characteristics of the secondary battery due to the change of electrode volume. As a means for this, a secondary battery having a current collector, a positive electrode, and a solid electrolyte stacked in this order and provided with a conductive layer interposed between the current collector and the positive electrode is used. Here, the positive electrode is a conversion electrode, the conductive layer has a conductivity lower than the current collector. When a central portion and end portions of the conductive layer in a direction along a surface of the current collector facing the conductive layer are compared, a thickness of the central portion of the conductive layer is greater than that of the end portions of the conductive layer.

## Description

### TECHNICAL FIELD

The present invention relates to a secondary battery including a solid electrolyte, an electrode, a current collector, and a conductive layer provided between the electrode and the current collector.

### BACKGROUND ART

In recent years, the use of lithium-ion secondary batteries as rechargeable secondary batteries has been expanding. Among them, solid-state batteries (semi-solid-state batteries) that use a solid electrolyte as an electrolyte exhibit a high level of safety because of the small amount of flammable electrolytic solution used. In addition, solid-state batteries have the potential to theoretically achieve a high energy density, and thus development is being conducted by many companies and others.

Patent Document 1 (Japanese Unexamined Patent Application Publication No. 2019-87420) discloses an all-solid-state battery including a solid electrolyte and a negative electrode in contact with the solid electrolyte, the negative electrode having a stainless mesh and a metal layer covering a surface of the stainless mesh.

Patent Document 2 (Japanese Unexamined Patent Application Publication No. S61-24143) discloses that a gold plating is applied to a surface of a stainless current collector such that the current collector is not in direct contact with a positive electrode active material constituting a battery.

### RELATED ART DOCUMENTS

### PATENT DOCUMENTS

Patent Document 1: Japanese Unexamined Patent Application Publication No. 2019-87420
Patent Document 2: Japanese Unexamined Patent Application Publication No. S61-24143

### SUMMARY OF THE INVENTION

### PROBLEMS TO BE SOLVED BY THE INVENTION

Solid-state batteries using a conversion electrode have the problem of significant deterioration in cycle characteristics due to the expansion change of electrode volume. An object of the present invention is to realize a secondary battery capable of suppressing the deterioration in cycle characteristics of the secondary battery due to the change of electrode volume.

Other objects and novel features will become apparent from the description of this specification and the accompanying drawings.

### MEANS FOR SOLVING THE PROBLEMS

Among the embodiments disclosed in this application, an outline of a representative embodiment will be briefly described as follows.

A secondary battery according to one embodiment includes a current collector, a positive electrode, and a solid electrolyte stacked in this order and is provided with a conductive layer interposed between the current collector and the positive electrode. Here, the positive electrode is a conversion electrode, the conductive layer has a conductivity lower than the current collector. When a central portion and end portions of the conductive layer in a direction along a surface of the current collector facing the conductive layer are compared, a thickness of the central portion of the conductive layer is greater than that of the end portions of the conductive layer.

### EFFECTS OF THE INVENTION

It is possible to realize a secondary battery capable of suppressing the deterioration in cycle characteristics of the secondary battery due to the change of electrode volume.

### BRIEF DESCRIPTION OF THE DRAWINGS

[FIG. 1] is a cross-sectional view illustrating a secondary battery according to an embodiment.
[FIG. 2] is a table illustrating compounding ratios of materials constituting an electrode (positive electrode) of the secondary battery according to the embodiment.
[FIG. 3] is a plan view and a cross-sectional view illustrating a conductive layer that covers a current collector of the secondary battery according to the embodiment.
[FIG. 4] is a graph illustrating a relationship between capacity and voltage when a secondary battery of a comparative example is charged and discharged at room temperature.
[FIG. 5] is a schematic diagram illustrating a manner of contraction of an electrode of the secondary battery of the comparative example.
[FIG. 6] is a schematic diagram illustrating the manner of contraction of the electrode of the secondary battery of the comparative example.
[FIG. 7] is a graph illustrating a relationship between capacity and voltage when the secondary battery according to the embodiment is charged and discharged at room temperature.
[FIG. 8] is a schematic diagram illustrating a manner of contraction of the electrode of the secondary battery according to the embodiment.
[FIG. 9] is a schematic diagram illustrating the manner of contraction of the electrode of the secondary battery according to the embodiment.
[FIG. 10] is a schematic diagram illustrating the manner of contraction of the electrode of the secondary battery according to the embodiment.
[FIG. 11] is a plan view and a cross-sectional view illustrating a conductive layer that covers a current collector of a secondary battery according to a modification of the embodiment.

### DETAILED DESCRIPTION OF PREFERRED EMBODIMENTS

Hereinafter, an embodiment of the present invention will be described in detail with reference to the drawings. Note that the members having the same function are denoted by the same reference numerals in all the drawings for describing the embodiment, and the repetitive descriptions thereof will be omitted. In the embodiment below, descriptions of the same or similar components are not repeated as a general rule unless particularly necessary. In the drawings illustrating the embodiment, hatching may be applied even in plan views or perspective views for making the structure easily understood. Further, in the drawings illustrating the embodiment, hatching may be omitted even in cross-sectional views for making the structure easily understood.

### (Embodiment)

As secondary batteries capable of achieving a higher energy density than lithium (Li)-ion secondary batteries based on intercalation reaction, there are lithium-ion secondary batteries based on conversion reaction. In the lithium-ion secondary batteries based on conversion reaction, the host material not only provides sites for accommodating the active material, but also itself participates in the redox reaction.

The lithium-ion secondary batteries based on conversion reaction include all-solid-state batteries that do not use liquid electrolyte (electrolytic solution) and solid-state batteries that use electrolytic solution in part and separate the electrolytic solution from the positive electrode (hereinafter referred to as semi-solid-state batteries in some cases).

Solid-state batteries have the problem that, since the electrode (positive electrode) undergoes expansion and contraction each time charging and discharging are performed, the contact between the current collector and the electrode is deteriorated due to the repetition of charging and discharging, resulting in a decrease in capacity. In the following, making the central portion of the conductive layer that covers the current collector of the secondary battery thicker than its end portions in order to solve the problem will be described.

### <Structure of Secondary Battery>

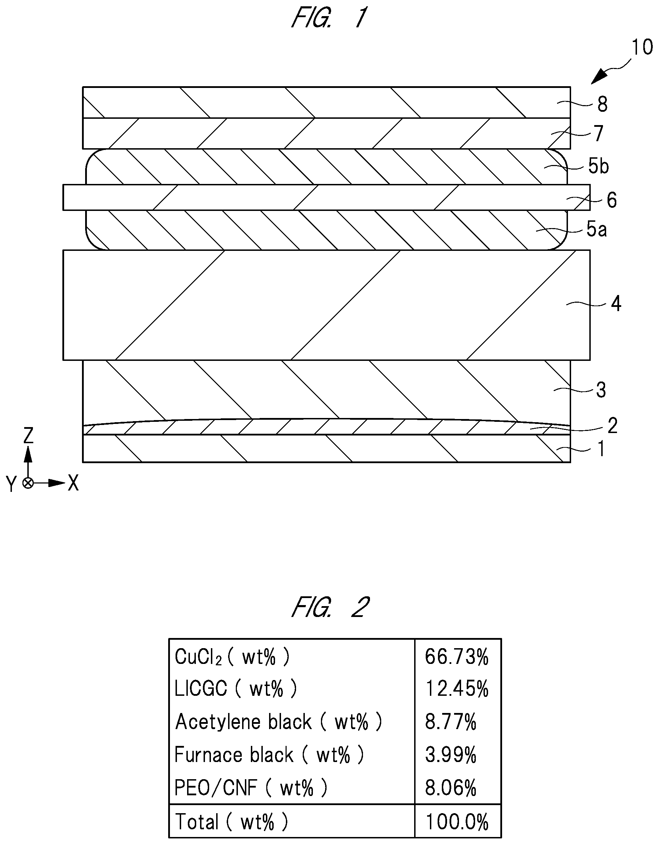

FIG. 1 illustrates a cross-sectional view of a secondary battery according to this embodiment. As illustrated in FIG. 1, a secondary battery 10, which is a solid-state battery (semi-solid-state battery), has a structure in which sheet-like members extending in an X-Y plane along an X direction and a Y direction and a part of liquid (electrolytic solution) are stacked. The secondary battery 10 is made up of a current collector 1, a conductive layer 2, a positive electrode 3, a solid electrolyte 4, an electrolytic solution 5a, a separator 6, an electrolytic solution 5b, a negative electrode 7, and a current collector 8, which are stacked in this order from the bottom in FIG. 1.

The current collectors (current collector foils) 1 and 8 are made of, for example, stainless steel. Each of the current collectors 1 and 8 has a protrusion (not illustrated) extending in the horizontal direction (X direction or Y direction), and these protrusions are used as terminals that connect the secondary battery 10 to the outside. The conductive layer 2 is, for example, an Au (gold) plating layer (hereinafter referred to as gold plating layer in some cases). The positive electrode 3 is a conversion electrode which is one of the two electrodes that the secondary battery 10 has. The conversion electrode is an electrode in which a reversible decomposition and reformation reaction (conversion reaction) occurs as an electrode reaction. The specific configuration of the positive electrode 3 will be described later. The solid electrolyte 4 is a material that can easily move ions by applying an electric field from the outside while remaining in a solid state. The solid electrolyte 4 is, for example, LICGC (registered trademark) containing lithium oxide.

The separator 6 is impregnated with the electrolytic solutions 5a and 5b. The separator 6 has a role of separating the negative electrode 7 from the solid electrolyte. Although the solid electrolyte 4 and the negative electrode 7 are separated from the separator 6 in FIG. 1, the solid electrolyte 4 and the negative electrode 7 may be in close contact with the separator 6 in reality. A polymer material (for example, polyethylene) having high lithium ion conductivity is used as the separator 6. Since LICGC (registered trademark) is reduced to lithium metal constituting the negative electrode 7, the direct contact between the solid electrolyte 4 and the negative electrode 7 is prevented using the separator 6 together with the electrolytic solutions 5a and 5b. Although the electrolytic solutions 5a and 5b are illustrated separately in FIG. 1, the electrolytic solutions 5a and 5b are impregnated into the separator 6 and are not separated from each other. The electrolytic solutions 5a and 5b have a role of smoothly moving lithium ions between the negative electrode 7 and the solid electrolyte 4. The electrolytic solutions 5a and 5b are mainly made of lithium salts, organic solvents, and additives. The negative electrode 7 is one of the two electrodes that the secondary battery 10 has. The negative electrode 7 is, for example, a metal layer containing lithium.

The stacked structure illustrated in FIG. 1 is sealed around its periphery by a laminate film (not illustrated). However, the above-mentioned protrusions which are parts of the current collectors 1 and 8 are exposed to the outside of the laminate film, and are used as terminals. The stacked structure and the laminate film that seals it form a cell of the solid-state battery. Inside the laminate film, the electrolytic solutions 5a and 5b are only impregnated into the separator 6 and the amount thereof is small, so that the electrolytic solutions 5a and 5b do not come into contact with the positive electrode 3. In other words, the secondary battery 10 of this embodiment is a semi-solid-state battery including the electrolytic solutions 5a and 5b and the solid electrolyte 4, in which the electrolytic solutions 5a and 5b are separated (spaced apart) from the positive electrode 3.

The positive electrode 3 of the secondary battery of this embodiment contains an active material, a conductive additive, an electrolyte, and a binder. However, the binder is not an essential element. A lithium-ion secondary battery is a chemical battery that extracts a chemical reaction as capacity. A material involved in this chemical reaction is referred to as an active material. The conductive additive has a role of ensuring the flow of electricity in the secondary battery 10, but is not directly involved in the chemical reaction.

The electrolyte is a material that allows the chemical reaction to occur smoothly throughout the positive electrode 3. In other words, it is considered that the chemical reaction in the positive electrode 3 of a solid-state battery occurs sequentially from the surface that is in contact with the solid electrolyte 4, whereas the chemical reaction is unlikely to occur in the locations other than the surface in the positive electrode 3. Therefore, by mixing an electrolyte into the positive electrode 3, the number of contact points between the positive electrode 3 and the electrolyte can be increased, making the chemical reaction occur more readily throughout the positive electrode 3. The binder is provided for achieving a uniform thickness of the positive electrode 3. In other words, the positive electrode 3 is formed by solidifying a semi-liquid slurry through a drying process. The binder gives the slurry viscoelasticity and has a role of preventing the slurry from flowing when the slurry is applied onto the current collector 1.

Next, examples of the materials constituting the positive electrode 3 will be described. The active material is made of copper chloride (CuCl₂). The electrolyte is a material containing lithium oxide and is made of, for example, LICGC (registered trademark). In this case, two conductive additives are blended: one is acetylene black (carbon) and the other is furnace black. The furnace black has the characteristic of being easily deformable. The binder is a mixture of polyethylene oxide (PEO) and cellulose nanofiber (CNF).

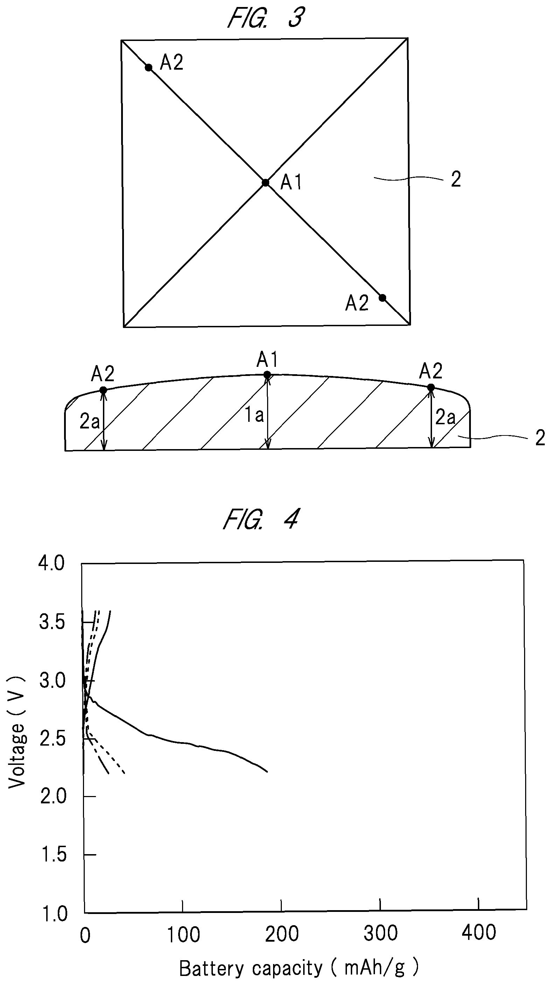

The current collector 1 has a first main surface on a side of the conductive layer 2 and a second main surface on a side opposite to the first main surface. Here, the conductive layer (plating base material) 2 which is a gold plating layer that covers the first main surface of the current collector 1 has a curvature such that the surface on the upper side (side of the positive electrode 3) bulges upward. The planar shapes of the respective components illustrated in FIG. 1 are all approximately rectangular. As illustrated in the upper part of FIG. 3, the planar shape of the conductive layer 2 is also rectangular. In FIG. 3, the shape of the conductive layer 2 in plan view is square, but this may be rectangular. In addition, the lower part of FIG. 3 illustrates a cross section taken along a diagonal line of the conductive layer 2 having a rectangular planar shape. As illustrated in this cross-sectional view, when the central portion and the end portions of the conductive layer 2 in the direction along the first main surface (X-Y plane) of the current collector 1 (see FIG. 1) facing the conductive layer 2 are compared, the thickness of the central portion is greater than that of the end portions. The thickness mentioned here refers to the length of the layer in the Z direction (thickness direction), which is the direction in which the members constituting the secondary battery 10 illustrated in FIG. 1 are stacked.

One of the main features of this embodiment is that the central portion of the conductive layer 2 in the direction along the first main surface of the current collector 1 has a greater thickness than the end portions of the conductive layer 2 as described above. The central portion of the conductive layer 2 having a rectangular planar shape is a location (point A1) including an intersection of the diagonal lines of the conductive layer 2 in plan view. In addition, the end portions of the conductive layer 2 having a rectangular planar shape are positions on the diagonal line of the conductive layer 2 in plan view, and are positions (points A2) located at a distance of 5% from the corner portions when the distance from the corner portion to the intersection is defined as 100%.

As illustrated in the cross section in the lower part of FIG. 3, a thickness 1a of the conductive layer 2 at the central portion (point A1) is greater than a thickness 2a at the end portions (points A2). The radius of curvature R formed by the three points of the central portion (point A1) and the two end portions (points A2) on the diagonal line of the conductive layer 2 is represented by 800000 mm < R.

Although the case in which the conductive layer 2 is a gold plating layer has been described here, the material of the conductive layer 2 is not limited to gold as long as it has a higher conductivity than the current collector (for example, current collector made of stainless steel) 1. A metal layer made of noble metal such as Au (gold) may also be used as the conductive layer 2. In addition, the conductive layer 2 need not be a plating layer, and may be a layer attached to the current collector 1.

### <Procedure for Manufacturing Secondary Battery>

Next, the procedure for manufacturing a cell of a secondary battery (solid-state battery) will be described. Here, the secondary battery in the course of the manufacturing process may be referred to as a stacked body. First, the conductive layer 2 which is a gold plating layer is formed by electroplating on the first main surface of the current collector 1 made of stainless steel. At this time, as described with reference to FIG. 3, the conductive layer 2 has a structure in which the central portion is thicker than the end portions.

Next, a slurry in which materials for forming a positive electrode are mixed is prepared. The slurry is a mixture of the active material (for example, copper chloride), the conductive additive (for example, material containing lithium oxide), the conductive additive (acetylene black and furnace black), and the binder (PEO/CNF) described above. These materials are liquid, and the slurry containing the binder is semi-liquid.

Next, the above slurry is applied onto the current collector 1 via the conductive layer 2. Next, the plate-shaped solid electrolyte 4 is attached onto the slurry. Next, the stacked body in which the solid electrolyte 4 is disposed on the current collector 1 via the slurry is placed in a vacuumed drying apparatus, and is vacuum-dried by heating with a heater. As a result, the slurry is solidified and the positive electrode 3 is formed. Next, the separator 6 into which the electrolytic solutions 5a and 5b have been injected, the negative electrode 7, and the current collector 8 are stacked in this order on the upper surface of the stacked body removed from the drying apparatus, that is, on the upper surface of the solid electrolyte 4. The secondary battery 10 made of the stacked body thus formed is sealed with a laminate film. Consequently, the secondary battery (solid-state battery, semi-solid-state battery) of this embodiment is almost completed.

### <Effects of This Embodiment>

As a semi-solid-state battery (secondary battery) of a comparative example, it is conceivable to cover the first main surface of the current collector on a side of the positive electrode with a primer coat layer which is a conductive layer containing carbon or a metal layer. Here, the surface of the conductive layer in contact with the electrode (positive electrode) of the secondary battery of the comparative example is flat. When charging and discharging are repeatedly performed using such a secondary battery of the comparative example, a phenomenon of deterioration in cycle characteristics (cycle degradation) in which the capacity that can be extracted from the secondary battery decreases every time charging and discharging are performed occurs as illustrated in FIG. 4.

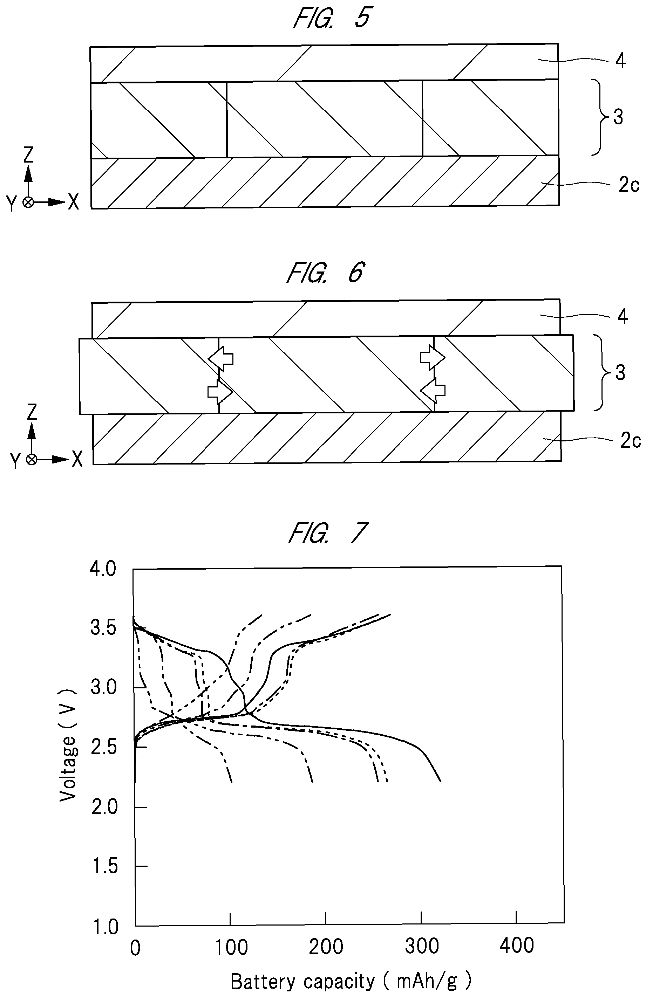

In the graphs illustrated in FIG. 4 and FIG. 7 to be described later, the horizontal axis represents the capacity of the secondary battery, and the vertical axis represents the voltage of the secondary battery. Also, in FIG. 4, the graphs for the first charging and discharging are indicated by solid lines, the graphs for the second charging and discharging are indicated by dashed lines, and the graphs for the third charging and discharging are indicated by dot-dashed lines. The graphs for charging slope upward to the right, and the graphs for discharging slope downward to the right. The charging and discharging measured when the graphs illustrated in FIG. 4 and FIG. 7 were obtained were performed under conditions in which the ambient temperature was 50°C, the cutoff voltage was 3.6 V or higher and 2.2 V or lower, and the charge-discharge rate was 0.05 C. Here, the secondary battery was discharged until being cut off, and then the next charging was performed.

This cycle degradation occurs because the positive electrode 3 which is the conversion electrode undergoes a volume change (expansion and contraction) every time the charge/discharge reactions occur. In other words, the positive electrode 3 expands during discharging and contracts during charging. Consequently, a stress is generated in the positive electrode 3 and the positive electrode 3 is deformed, so that the contact between the positive electrode 3 and the current collector 1 is deteriorated through the repetitions of charge/discharge cycles. As a result, the cycle characteristics are deteriorated.

Specifically, as illustrated in FIG. 5, the positive electrode 3 is provided between a conductive layer 2c and the solid electrolyte 4 constituting the secondary battery of the comparative example. The surface of the conductive layer 2c on the side of the positive electrode 3 is flat in the comparative example. Although the positive electrode 3 is an integrated layer as a whole, the positive electrode 3 divided into three parts is illustrated here as an example. In FIG. 5 and in FIG. 6 and FIG. 8 to FIG. 10 used in the following description, the illustrations of the current collector below the conductive layer and the structure above the solid electrolyte are omitted.

When the charge/discharge reactions occur in the secondary battery of the comparative example, the positive electrode 3 expands (or contracts) as illustrated in FIG. 6. At this time, since the thickness of the conductive layer 2c is uniform, current flows uniformly in any region in the direction along the X-Y plane (horizontal direction). In other words, in the positive electrode 3, the reaction occurs uniformly in any region in the direction along the X-Y plane (horizontal direction). Here, when the volume of the positive electrode 3 expands, the inner part is compressed by the expansion of both adjacent parts, but the inner part itself must also expand. If a large stress is applied to the positive electrode 3 due to the resulting mutual pushing, cracks may occur in the positive electrode 3. In addition, the fact that the reaction causes the expansion conversely means that the clean reaction cannot occur without expansion, so that many side reactions take place, resulting in capacity degradation. In addition, the inner part of the positive electrode 3 may be significantly deformed in the vertical direction by being pushed from both sides. As a result of these phenomena, the contact between the positive electrode 3 and the current collector 1 (conductive layer 2c) is deteriorated through the repetitions of charge/discharge cycles, causing the cycle degradation.

In contrast, in the secondary electrode of this embodiment, the central portion of the conductive layer 2 that covers the current collector 1 has a greater thickness than the end portions. FIG. 7 illustrates the cycle characteristics of the secondary battery 10. In FIG. 7, the graphs for the first charging and discharging are indicated by solid lines, the graphs for the second charging and discharging are indicated by dashed lines, the graphs for the third charging and discharging are indicated by dot-dashed lines, the graphs for the tenth charging and discharging are indicated by two-dot-dashed lines, and the graphs for the thirtieth charging and discharging are indicated by three-dot-dashed lines. The graphs for charging slope upward to the right, and the graphs for discharging slope downward to the right. The charging and discharging were performed under conditions in which the ambient temperature was 50°C, the cutoff voltage was 3.6 V or higher and 2.2 V or lower, and the charge-discharge rate was 0.05 C.

As illustrated in FIG. 7, the secondary battery of this embodiment can extract a larger capacity even after performing the charging and discharging thirty times, as compared with the case in which the charging and discharging are performed twice in the comparative example illustrated in FIG. 4. The secondary battery of this embodiment also has an improved capacity as compared with the comparative example.

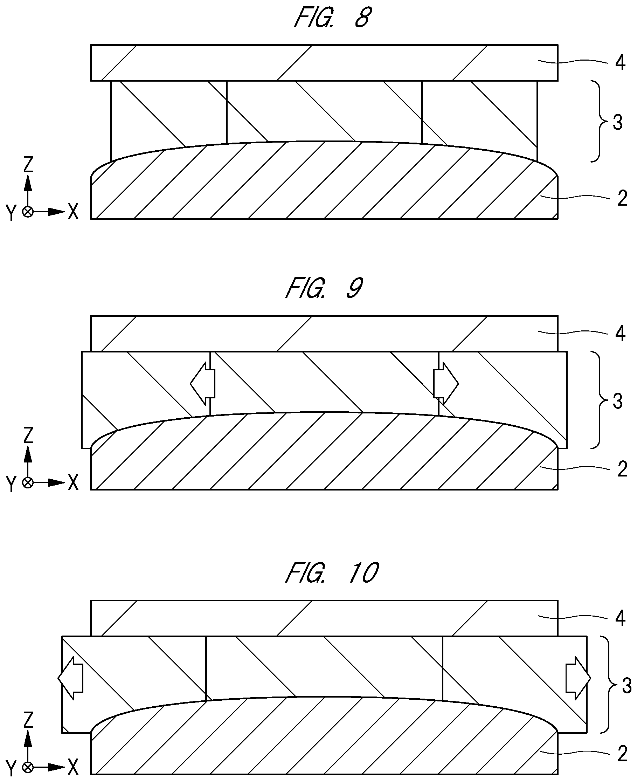

In the secondary battery of this embodiment, as illustrated in FIG. 8, the thickness of the conductive layer 2 on the current collector 1 (see FIG. 1) is greater at the central portion than that at the end portions. In other words, the conductive layer 2 is designed to be thicker at the center. In such a case, since the central portion of the conductive layer 2 is thick, electricity flows more easily through the central portion and the positive electrode 3 directly above it. In other words, reactions and expansion occur preferentially from the central portion in the positive electrode 3.

Accordingly, since expansion occurs from the central portion of the positive electrode 3 and then expansion begins on both sides (end portions) of the positive electrode 3, the mutual pushing is unlikely to occur between the central portion and both sides. As a result, the generation of internal stress in the positive electrode 3 is suppressed, and cracks in the positive electrode 3 can be prevented. In addition, capacity degradation due to stress can be prevented. Furthermore, deformation of the central portion of the positive electrode 3 in the vertical direction caused by being pushed from both sides can be prevented. In other words, deterioration of the contact between the positive electrode 3 and the conductive layer 2 can be prevented. As described above, the cycle characteristics of the secondary battery are improved in this embodiment.

The conductive layer 2 of this embodiment only needs to have a thickness that increases toward the core portion. In other words, the thickness of the conductive layer 2 increases continuously from the end portions toward the central portion. The ideal thickness of the conductive layer 2 is 0.2 µm or more and 5 µm or less, and preferably 3 µm or more and 5 µm or less. The difference in thickness levels becomes effective when the thickness at the central portion is 130% (0.26 µm) or more relative to the thickness at the end portion, which serves as a reference value (lower limit value, for example, 0.2 µm).

### <Modification>

In the following, a case where the planar shape of the conductive layer 2 is circular will be described. In this case, it is assumed that the planar shapes of the respective components illustrated in FIG. 1 are all circular.

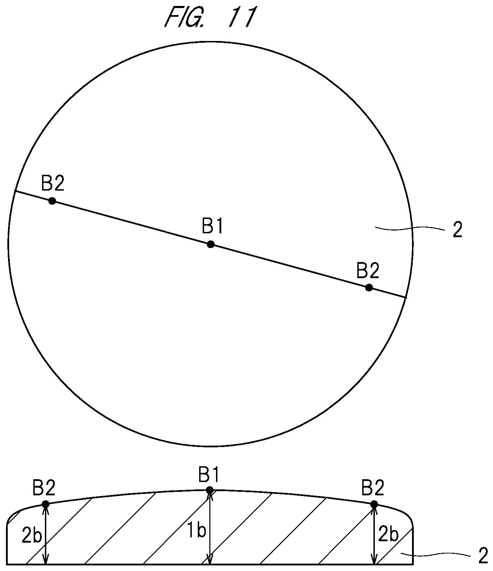

As illustrated in the upper part of FIG. 11, the planar shape of the conductive layer 2 is circular. Also, the lower part of FIG. 11 illustrates a cross section along the radial direction of the conductive layer 2 having a circular planar shape. As illustrated in this cross-sectional view, when the central portion and the end portions of the conductive layer 2 in the direction along the first main surface (X-Y plane) of the current collector 1 (see FIG. 1) facing the conductive layer 2 are compared, the thickness of the central portion is greater than that of the end portions.

The central portion of the conductive layer 2 having a circular planar shape is a location (point B1) including a center point of the circular shape. In addition, the end portions of the conductive layer 2 having a circular planar shape are positions on the radiuses of the conductive layer 2 in plan view, and are positions (points B2) located at a distance of 5% from edge portions when the distance from the edge portion to the center point is defined as 100%.

As illustrated in the cross section in the lower part of FIG. 11, a thickness 1b of the conductive layer 2 at the central portion (point B1) is greater than a thickness 2b at the end portions (points B2). The radius of curvature R formed by the three points of the central portion (point B1) and the two end portions (points B2) on the diameter of the conductive layer 2 in plan view is represented by 800000 mm < R.

In the foregoing, the invention made by the inventors of this application has been specifically described based on the embodiment, but it is needless to say that the present invention is not limited to the embodiment described above and can be modified in various ways with the range not departing from the gist thereof.

For example, a semi-solid-state battery has been described as an example in the embodiment above, but the embodiment can also be applied to a positive electrode of an all-solid-state battery.

### REFERENCE SIGNS LIST

- 1, 8: current collector
- 2, 2c: conductive layer
- 3: positive electrode
- 4: solid electrolyte
- 5a, 5b: electrolytic solution
- 6: separator
- 7: negative electrode
- 10: secondary battery

## Claims

1. A secondary battery having a current collector, an electrode, and a solid electrolyte stacked in this order, the secondary battery comprising:
a conductive layer interposed between the current collector and the electrode,
wherein the electrode is a conversion electrode,
wherein the conductive layer has a conductivity lower than the current collector, and
wherein, when a central portion and end portions of the conductive layer in a direction along a surface of the current collector facing the conductive layer are compared, a thickness of the central portion of the conductive layer is greater than that of the end portions of the conductive layer.

2. The secondary battery according to claim 1,
wherein a planar shape of the conductive layer is rectangular,
wherein the central portion of the conductive layer includes an intersection of diagonal lines of the conductive layer in plan view, and
wherein the end portions of the conductive layer are positions on the diagonal line and are positions located at a distance of 5% from corner portions of the conductive layer when a distance from the corner portion to the intersection is defined as 100%.

3. The secondary battery according to claim 1,
wherein a planar shape of the conductive layer is circular,
wherein the central portion of the conductive layer includes a center point of the circular shape, and
wherein the end portions of the conductive layer are positions on radiuses of the conductive layer and are positions located at a distance of 5% from edge portions of the conductive layer when a distance from the edge portion to the center point is defined as 100%.

4. The secondary battery according to claim 1,
wherein a radius of curvature R formed by three points of the two end portions of the conductive layer and the central portion therebetween, which are arranged in a straight line in plan view, is represented by 800000 mm < R.

5. The secondary battery according to claim 1,
wherein the thickness of the central portion of the conductive layer is 130% or more of the thickness of the end portions.
